# EUROPEAN PATENT APPLICATION

(11) **EP 1 944 941 A1**
(43) Date of publication of application: **16.07.2008**
(21) Application number: 07291303.1
(22) Date of filing: 29.10.2007
(51) Int. Cl.: H04L 29/06

(54) **Method for securely communicating data between members of a group of mobile devices using a wireless channel**

(30) Priority: 10.11.2006 US 595763
(71) Applicant: Mitsubishi Electric Corporation, Chiyoda-ku Tokyo 100-8310 (JP)
(72) Inventor: Cukier, Johnas I., Needham, MA 02492 (US); Munaka, Tatsuji, c/o Mitsubishi Electric Corporation, Tokyo 100-8310 (JP)
(74) Representative: Blot, Philippe Robert Emile

(57) **Abstract**

A method securely communicates data between members of a group of mobile devices using a wireless channel. The members include a group leader. Each member is associated with a physical token. Each member and associated token stores a binding key. Each member also stores an identification. A session key is stored by the group leader. Each token generates a member key, which is encrypted with the binding key and transmitted to the member where it is decrypted and stored. The session key is distributed securely to each member. Each member key is securely passed to the group leader. Then, data to be communicated between the group leader and a particular member can be encrypted using the associated member key of the particular member and the session key.

## Description

This invention relates generally to communicating data between mobile devices, and more particularly to communicating the data securely.

Mobile computing and communication devices have increased demand for communicating data, performing business transactions, and mobile computing. Mobile devices can easily be lost or stolen putting stored data at risk. Wireless communications are subject to interception.

Access to the data stored on the mobile devices can be controlled with authentication mechanisms, such as passwords, biometrics, and tokens. For password-authentication, the user enters a name and password to access data. However, after user authentication, the data are vulnerable to unauthorized access. For biometric authentication, the user supplies a biometric feature, such as fingerprint, for authentication. However, biometric authentication mechanisms are complex and tend to have a high false-negative rate.

Token enabled user authentication is described in detail in the parent application.

U.S. Published Application 2003/0233538 describes a communication system that provides secure collaborative group communication among a subset of nodes in a mobile ad hoc network. That system uses secure virtual communication channels between member nodes of the network with a topology based reverse path forward network layer protocol.

U.S. Patent 5,970,144 describes a system and method for enabling sensitive authentication information to be under the control of an authentication center (AC) and transmitting only non-sensitive authentication information to the AC.

The embodiments of the invention provide a system and method to protect data communicated between members of a group of mobile devices using a wireless channel. Each mobile device is associated with a physical token. The mobile device can not be operated unless the token is within communication range of the mobile device. A range of the wireless communication is relatively small, e.g., meters or less.

The method involves three phases of operation: user authentication, key distribution, and data communication. The authentication phase involves token-base authentication to enable operation of the mobile device by the authenticated user. The key distribution phase involves the distribution of keys among the member mobile devices. The data communication phase involves the actual sharing of secured data amongst the group participants. The data are encrypted using the distributed keys. Short range wireless communication can be used for the authentication, distribution and data communication phases.
Figure 1 is a block diagram of a member mobile device and an associated physical token according to an embodiment of the invention;
Figure 2 is a block diagram of a group of member mobile devices and associated tokens including a group leader mobile device according to an embodiment of the invention;
Figure 3 is a block diagram of a method for securely communicating data among the member mobile devices of Figure 2 using, in part, a removable memory;
Figure 4 is a block diagram of a method for securely communicating data among the member mobile devices of Figure 2 using, in part, images; and
Figure 5 is a block diagram of a method for securely communicating data among the member mobile devices of Figure 2 using, in part, a wireless channel.

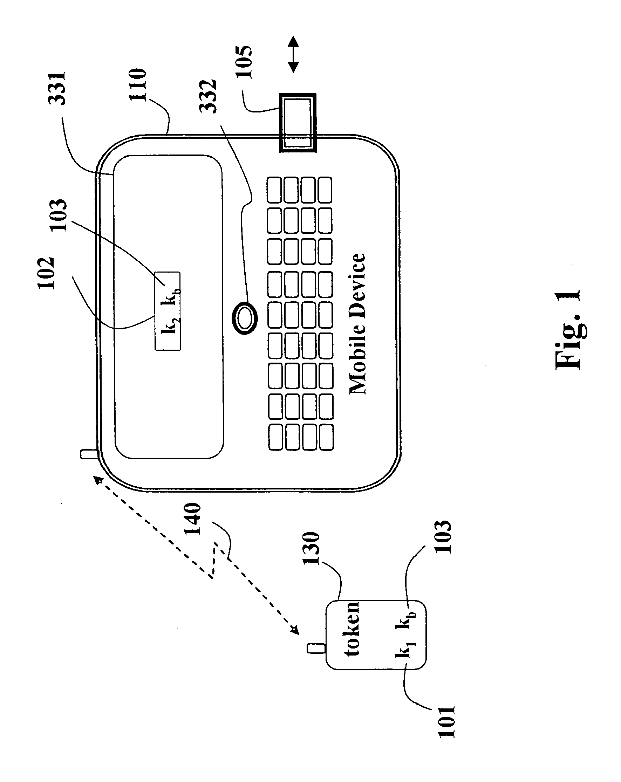

Figure 1 shows one member 110 of a group of mobile devices. The mobile device is associated with a physical token 130. The mobile device can be a PDA, laptop, camera, removable storage, portable music or video player, mobile telephone, and the like. The mobile device and token 130 can communicate with each other via a wireless channel 140. The mobile device can also include display interface 331 and a camera interface 332.

The token 130 stores a first key k₁ 101 and a binding key k_{b} 103. The mobile device stores a second key k₂ 102 and the binding key k_{b}, 103. The keys can be stored in memories of the devices and tokens. In one embodiment, the mobile device can also include a removable memory, e.g., a memory card 105.

A user authentication phase, that uses the keys k₁, k₂, and k_{b} is described in related U.S. Patent Application 11/317,136, "Token-Enabled Authentication for Securing Mobile Devices," filed by Cukier et al., on December 22, 2005, incorporated herein by reference.

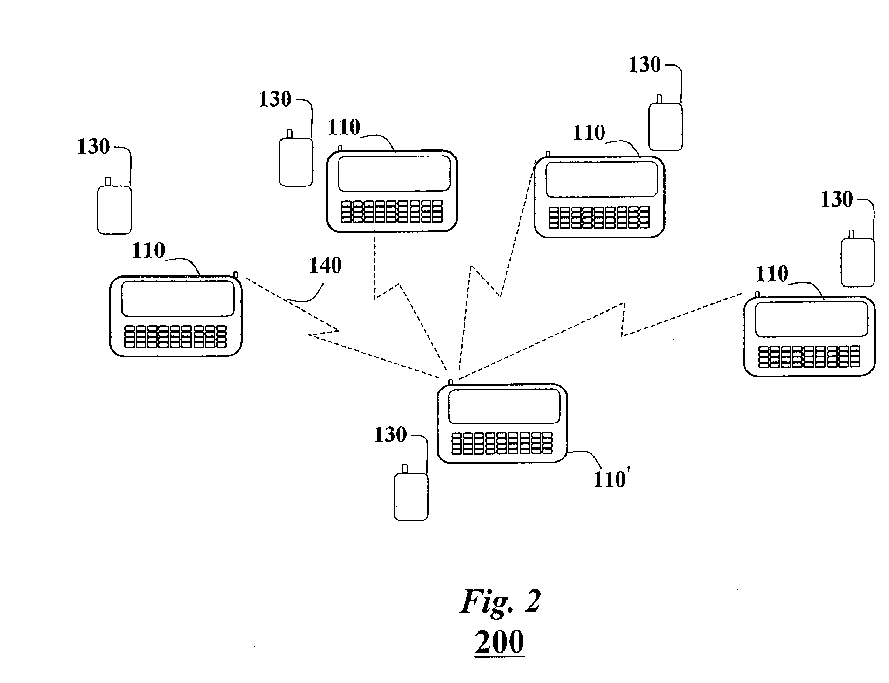

Figure 2 shows members of a group 200 of mobile devices 110. Each member is associated with one of the tokens 130. One member 110' of the group 200 is designated as a group leader.

It is desired to securely communicate data between the members of the group of mobile devices during a group session. Therefore, keys need to be distributed among the members during a key distribution phase.

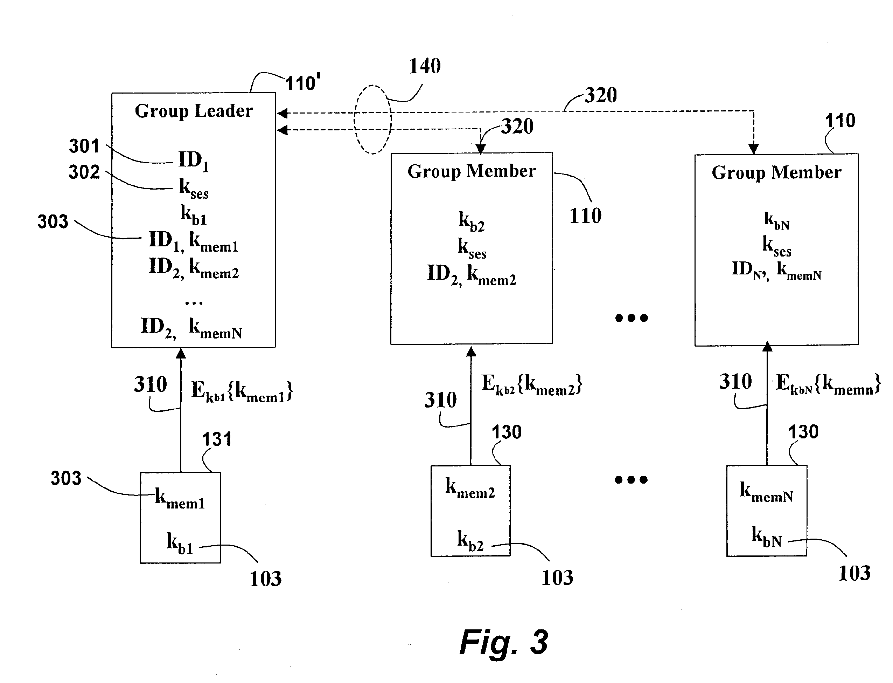

Figures 3-5 shows key distribution according to embodiments of the invention.

### Physical Key Distribution

Each member 110 has a unique identification ID_{N} 301. A group session key kₛₑₛ 302 is stored by the group leader 110'.

Each token of each group member generates a member key kₘₑₘ 303 The token can generate this key using some random generation process. The member key is encrypted (E) 310 using the associated binding key k_{b} 103 and passed to the mobile device, using the wireless channel 140. The member mobile device decrypts and stores the member key 303. In one embodiment, the session key and the member key is also stored on the removable memory 105.

The removable memory 105 is physically passed to each member, and each member reads the session key kₛₑₛ, and stores its ID and member key kₘₑₘ on the card. The card is passed back to the group leader. The group leader reads the IDs and member keys and stores the IDs and member keys locally in the memory.

At this point the group leader can securely communicate 320 data on the wireless channel 140 with any member device by encrypting the data with the appropriate member key according to E^{kₘₑₘ} {data}. Members can communicate with each other via the group leader, or members can become group leaders at any time. At the end of the session the session key and member keys can be erased.

### Visual Key Distribution

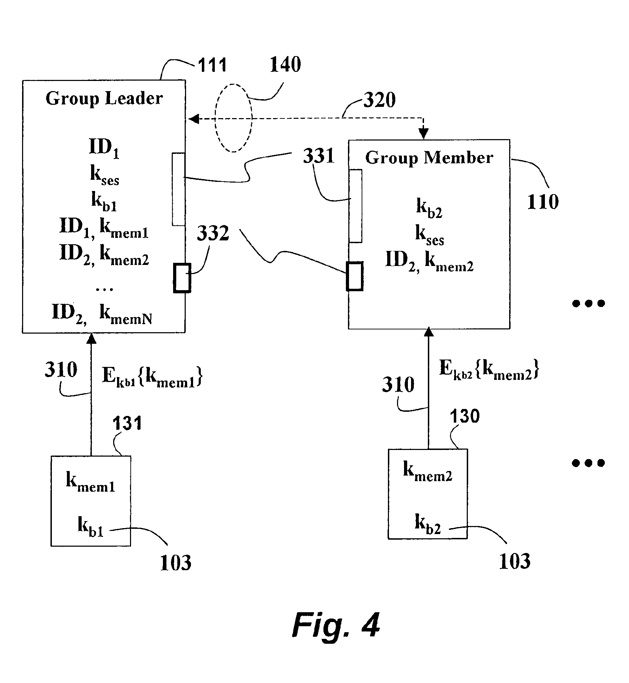

Instead of physically storing the keys and IDs on the memory card, the member devices can display the IDs and keys on a display interface 331 as shown in Figure 4. The display can be encoded as a bar code, for example. A camera interface 332 can be used by the group leader to acquire an image of the member displays and to recover the IDs and keys. The group leader can then distribute the session key encrypted with the member key to each member via the wireless interface. The members decrypt and store the session key using their member keys. Then, the members can securely communicate 320 data as described above. Data intended for all members can be encrypted with the session key kₛₑₛ, while data intended for a single member can be encrypted with the appropriate member key kₘₑₘ. Then, secure communication can proceed as described above.

### Wireless Key Distribution

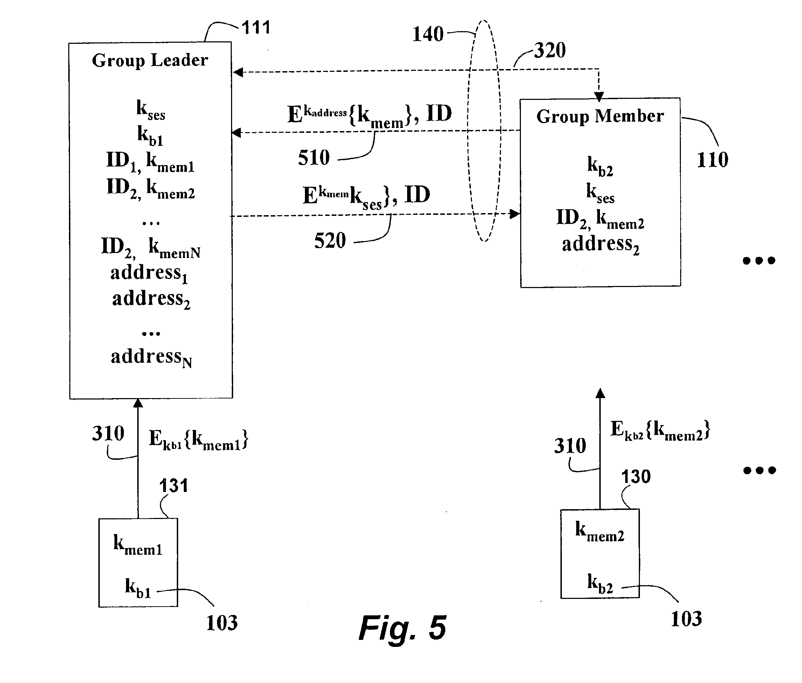

In this embodiment as shown in Figure 5, each mobile device has a unique address used for communication, e.g., a telephone number, or some other network address. The addresses of the members are known to the group leader. The address will be used as an address key k_{address}.

Session and member keys are generated as described above. Each group member that wants to participate in securely sharing data during the session encrypts its member key kₘₑₘ with the address key k_{address} according to E^{k_{address}} {kₘₑₘ}. The encrypted address and member ID is transmitted securely 510 to the group leader using the wireless channel 140.

The group leader mobile device decrypts and stores the member keys of the each member. The group leader encrypts the session key with each member key, and distributes 520 the session key to all participating members using the wireless channel 140.

The members decrypt and store the session key using their member keys. Then, the members can securely communicate 320 data as described above. Data intended for all members can be encrypted with the session key kₛₑₛ, while data intended for a single member can be encrypted with the appropriate member key kₘₑₘ.

All keys are erased at the end of the session.

Although the invention has been described by way of examples of preferred embodiments, it is to be understood that various other adaptations and modifications can be made within the spirit and scope of the invention. Therefore, it is the object of the appended claims to cover all such variations and modifications as come within the true spirit and scope of the invention.

## Claims

1. A method for securely communicating data between members of a group (200) of mobile devices (110) using a wireless channel (140), in which the members include a group leader (110'), in which each member (110) is associated with a physical token (130) capable of communicating with the member (110) via the wireless channel (140), comprising the steps of:
storing, in each member (110) and associated token (130), a binding key known only to the member and the associated token;
storing, in each member (110), an identification associated with member;
storing a session key in the group leader (110');
generating, by each token (130), a member key associated with the member (110);
encrypting the member key with the binding key stored in the token;
transmitting the encrypted member key to the member from the associated token using the wireless channel (140) ;
decrypting the encrypted member key in the associated member using the binding key, and storing the member key;
distributing securely the session key to each member (110);
passing securely each member key to the group leader (110'); and
encrypting data to be communicated between the group leader (110') and a particular member using the associated member key of the particular member.

2. The method of claim 1, in which the distributing of the session key and the passing of the member keys is performed using a removable memory card (105) storing the session key and the member keys.

3. The method of claim 1, in which the distributing of the session key and the passing of the member key is performed using images of the session key and the member keys.

4. The method of claim 1, in which the distributing of the session key and the passing of the member key is performed using the wireless channel (140).

5. The method of claim 3, in which each member includes a display interface (331) and a camera interface (332) to process the images.

6. The method of claim 5, in which the distributing of the session key and the passing of the member key is performed using an address associated with the member (110), the address for encrypting the session key and the member key.

7. The method of claim 1, further comprising the step of:
encrypting data to be communicated between the group leader (110') and all members (110) using the session key.
